# EUROPÄISCHE PATENTSCHRIFT

(11) **EP 2 654 128 B1**
(45) Veröffentlichungstag und Bekanntmachung des Hinweises auf die Patenterteilung: **05.04.2017**
(21) Anmeldenummer: 13163924.7
(22) Anmeldetag: 16.04.2013
(51) Int. Cl.: H01R 4/48, H01R 4/64, H01R 25/14, H02G 3/32

(54) **Befestigungsvorrichtung**
Attachment device
Dispositif de fixation

(30) Priorität: 18.04.2012 DE 102012103395
(43) Veröffentlichungstag der Anmeldung: 23.10.2013
(73) Patentinhaber: HEBOTEC GmbH, 72116 Mössingen (DE)
(72) Erfinder: Böhringer, Markus, 72116 Mössingen (DE); Hermann, Gerold, 72108 Rottenburg-Obernau (DE)
(74) Vertreter: Kohler Schmid Möbus Patentanwälte

(56) Entgegenhaltungen:
- DE-A1-102007 005 964
- DE-A1-102008 022 858
- DE-A1-102010 047 611
- DE-A1-102012 000 681
- DE-B3-102009 006 730
- DE-B3-102009 057 514
- FR-A1- 2 946 103
- US-A- 1 585 840

## Beschreibung

Die Erfindung betrifft eine Befestigungsvorrichtung zur Ausbildung einer elektrischen und/oder einer mechanischen Verbindung zwischen einer Stromschiene, Montageplatte oder insbesondere leitenden Montagefläche und einem oder mehreren Gegenständen, mit mindestens einer Klammer, die einen Fußteil und zwei Schenkel zur klemmenden Halterung des Gegenstands umfasst, wobei die Befestigungsvorrichtung einen Träger umfasst, an dem die mindestens eine Klammer fixiert oder fixierbar ist, der an der Stromschiene, Montageplatte oder insbesondere leitenden Montagefläche anordenbar ist.

Häufig besteht die Anforderung, längliche Gegenstände, wie beispielsweise elektrische Kabel oder Leitungen oder Rohre nahe beieinander anzuordnen und zu fixieren. Beispielsweise müssen Kabel oder elektrische Leitungen in Schaltschränken platzsparend angeordnet werden. Gleiches gilt für Kraftfahrzeuge.

Aus der DE 10 2009 057 514 B3 ist eine Vorrichtung zum Halten und Festklemmen wenigstens eines Schirmkabels auf einer U-Schiene bekannt. Die Vorrichtung umfasst Spangen, die auf eine Stromschiene aufsteckbar sind. An den Spangen sind Schirmklemmen über einen Niet befestigt. Mehrere Spangen können nebeneinander auf die Stromschiene aufgeklipst werden. Die Schirmklemmen benachbarter Spangen sind in Querrichtung zur Längsachse der U-Schiene zueinander versetzt angeordnet, sodass keine gegenseitige Berührung der benachbarten Schirmklemmen in Längsrichtung der U-Schiene erfolgt.

Aus der DE1020120047611 ist eine Vorrichtung zum Halten und Festklemmen fünf Schirmkabel auf einer Schiene bekannt. Die Vorrichtung umfasst einen Träger, der einen Blechstreifen umfasst. Von dem Blechstreifen gehen fünf "Zinken" aus, von denen jede eine Schirmklemme trägt.

Aufgabe der vorliegenden Erfindung ist es, eine Befestigungsvorrichtung bereitzustellen, mit der länglichen Gegenstände noch einfacher und zuverlässiger bei geringem Platzbedarf befestigt werden können.

Gelöst wird diese Aufgabe durch eine Befestigungsvorrichtung zur Ausbildung einer elektrischen und mechanischen Verbindung zwischen einer Stromschiene, Montageplatte oder insbesondere leitenden Montagefläche und einem oder mehreren länglichen Gegenstände mit mindestens einer Klammer, die einen Fußteil und zwei Schenkel zur klemmenden Halterung des Gegenstands umfasst, wobei die Befestigungsvorrichtung einen Träger umfasst, an dem die mindestens eine Klammer fixiert ist, der an der Stromschiene, Montageplatte oder insbesondere leitenden Montagefläche anordenbar ist. Es sind zumindest zwei Klammern an dem Träger in Längsrichtung des Trägers hintereinander vorgesehen wobei die Klammern quer zur Längsrichtung des Trägers versetzt zueinander angeordnet sind. Dies bedeutet, dass im Unterschied zum Stand der Technik mehrere Klammern an einem einzigen Träger angeordnet sind. Die Klammern sind versetzt angeordnet, sodass mehrere längliche Gegenstände, beispielsweise Kabel oder elektrische Leitungen, oder Rohre nebeneinander in geringem Abstand angeordnet werden können. Dadurch, dass zumindest zwei Klammern an einem einzigen Träger zueinander versetzt angeordnet sind, können mehrere Träger beispielsweise an einer Stromschiene nebeneinander angeordnet werden, wobei die Klammern quasi ineinandergreifen. So ergibt sich eine besonders kompakte, platzsparende Anordnung. Ein weiterer Vorteil der erfindungsgemäßen Befestigungsvorrichtung liegt darin, dass diese stets in derselben Orientierung angeordnet werden kann. Im oben erwähnten Stand der Technik ist es erforderlich, dass die Spangen, die die Klammern tragen, abwechselnd in unterschiedlicher Orientierung an der Stromschiene montiert werden. Nur dadurch lässt sich der Versatz der Klammern herstellen.

Gemäß einer Ausführungsform der Erfindung kann vorgesehen sein, dass die Klammern mit dem Träger vernietet sind. Dadurch ergibt sich eine besonders stabile Anordnung und ein günstiges Herstellungsverfahren. Vorzugsweise sind die Klammern drehfest an dem Träger angeordnet.

Alternativ oder zusätzlich ist es denkbar, dass die Klammern an dem Träger lösbar befestigt sind. Wenn die Klammern lösbar am Träger befestigt sind, können Klammern mit unterschiedlichen Öffnungen zur Aufnahme von Gegenständen mit unterschiedlichen Durchmessern eingesetzt werden. Somit ergibt sich eine größere Variabilität. Beispielsweise können die Klammern an dem Träger verrastet werden.

Es kann vorgesehen sein, dass zumindest eine Klammer seitlich über den Träger übersteht. Dies bedeutet, dass die Klammer in einen Freiraum eines benachbarten Trägers ragen kann. Insbesondere können die Träger relativ schmal ausgebildet sein.

Bei der Stromschiene, Montageplatte oder insbesondere leitenden Montagefläche kann es sich insbesondere um eine an einem Schaltschrank angeordnete Stromschiene, Montageplatte oder Montagefläche handeln. Unter Stromschiene, Montageplatte oder leitenden Montagefläche im Sinne der Erfindung werden allerdings jegliche elektrischen Leiter, beispielsweise auch Sammelschienen, Kabel oder elektrische Leiter einer Platine verstanden. Ferner kann es sich bei den Klammern um Schirmklammern handeln.

Der Träger kann eine insbesondere taillierte Zugentlastungsaufnahme aufweisen. Als Zugentlastung kann beispielsweise ein Kabelbinder verwendet werden. Bei der Zugentlastungsaufinahme kann es sich um einen Fortsatz des Trägers oder einen Vorsprung des Trägers handeln, beispielsweise in Form eines Metallstreifens. Die Zugentlastungsaufnahme ist vorzugsweise tailliert ausgebildet, sodass sich die daran befestigte Zugentlastung nicht oder nur in Grenzen verschieben kann. Weiterhin kann vorgesehen sein, dass die Zugentlastungsaufnahme eine Öffnung aufweist. An einer solchen Öffnung kann eine Zugentlastung besonders zuverlässig befestigt werden.

Der Träger kann zumindest in einem Verbindungsbereich U-förmig ausgebildet sein. Dadurch kann eine Stromschiene, Montageplatte oder leitende Montagefläche, insbesondere eine im Querschnitt rechteckige Stromschiene, zumindest teilweise umfasst werden. Auch ist es bei einer derartigen Befestigung möglich, den Träger in Längsrichtung der Stromschiene, Montageplatte oder leitenden Montagefläche zu verschieben.

Weiterhin kann der Träger Rastnasen oder dergleichen aufweisen, die die Stromschiene, Montageplatte oder leitende Montagefläche oder Öffnungen der Stromschiene, Montageplatte oder leitenden Montagefläche hintergreifen, um den Träger dadurch zuverlässig an Stromschiene, Montageplatte oder Montagefläche zu befestigen.

Gemäß einer Ausgestaltung der Erfindung kann vorgesehen sein, dass die Klammern in Längsrichtung des Trägers gesehen hinter dem Verbindungsbereich angeordnet sind. Dies bedeutet, dass die länglichen Gegenstände, die mit den Klammern befestigt werden, seitlich neben der Stromschiene oder dergleichen angeordnet sind. Anders als im Stand der Technik erfolgt keine Befestigung unmittelbar über der Stromschiene.

Weitere Vorteile ergeben sich, wenn bei zumindest einer Klammer Abschnitte der Schenkel aneinander vorbeibewegbar sind. Dadurch, dass Abschnitte der Schenkel aneinander vorbeibewegbar sind, können die Schenkel im Bereich des Klemmbereichs näher aneinander angenähert werden, als dies im Stand der Technik möglich war. Dadurch können auch Gegenstände mit geringeren Dimensionen, insbesondere geringem Durchmesser, klemmend gehalten werden. Jede einzelne Klemme hat dadurch einen größeren Einsatzbereich.

Gemäß einer bevorzugten Ausführungsform kann vorgesehen sein, dass zumindest einer der Schenkel in einem Abschnitt schmaler ist als der Fußteil. Beispielsweise könnte der andere Schenkel in diesem Fall geschlitzt sein, wobei die Schlitzbreite etwas größer ist als der in der Breite reduzierte Abschnitt des anderen Schenkels. Mit dem in der Breite reduzierten Teil könnte somit der eine Schenkel quasi durch den anderen Schenkel hindurchbewegt werden.

Gemäß einer vorteilhaften Ausgestaltung der Erfindung kann vorgesehen sein, dass einer der Schenkel eine Öffnung aufweist und der andere Schenkel diese Öffnung mit einem Abschnitt durchgreift. Die Öffnung kann dabei schlitzförmig ausgebildet sein. Die Schenkel können im Bereich der Öffnung abgewinkelt sein. Insbesondere kann ein abgewinkelter Abschnitt eines Schenkels, der in der Breite gegenüber dem Fußteil reduziert ist, durch die Öffnung des anderen Schenkels, der im Bereich der Öffnung ebenfalls abgewinkelt ist, hindurchgeführt werden. Dadurch ist es möglich, die Auswölbungen der Schenkel näher aneinander anzunähern als dies der Fall wäre, wenn die entsprechende Öffnung und Breitenreduzierung der Schenkel nicht vorhanden wäre.

Gemäß einer weiteren Ausführungsform kann vorgesehen sein, dass die Schenkel jeweils in einem Abschnitt mit einer geringeren Breite als der Fußteil ausgebildet sind und die Abschnitte sich überlappen. Insbesondere kann jeder Schenkel in einem Abschnitt etwa die Hälfte der Breite des Fußteils aufweisen. Dadurch können die Schenkel aneinander vorbeibewegt werden, ohne dass dadurch die Breite der Klammer vergrößert wird.

Besonders vorteilhaft ist es, wenn die Klammer mit einem elektrisch leitfähigen Material beschichtet ist. Beispielsweise kann die Klammer verzinkt, vernickelt oder vergoldet sein. Dadurch ist es zum Beispiel möglich, Ströme von Kabelschirmungen abzuleiten.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren beliebigen Kombinationen bei Varianten der Erfindung verwirklicht sein.

In der schematischen Zeichnung sind Ausführungsbeispiele der Erfindung dargestellt und in der nachfolgenden Zeichnung näher erläutert.

Es zeigen:
- Fig. 1: eine perspektivische Ansicht einer Befestigungsvorrichtung;
- Fig. 2: eine Seitenansicht der Befestigungsvorrichtung der Fig. 1;
- Fig. 3: eine Frontansicht der Befestigungsvorrichtung der Fig. 1;
- Fig. 4: eine perspektivische Darstellung einer alternativen Ausführungsform einer Befestigungsvorrichtung;
- Fig. 5: eine perspektivische Ansicht eines Trägers, an dem drei Klammern befestigt werden können.

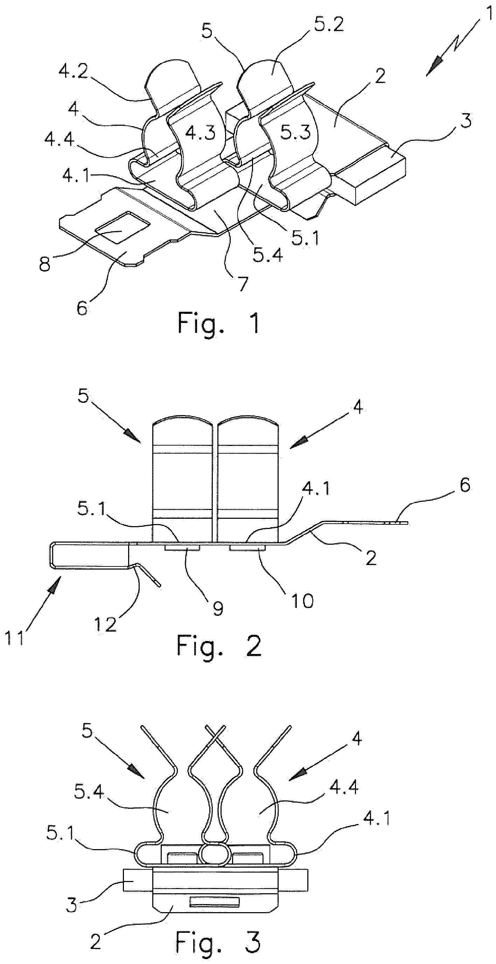

Die Fig. 1 zeigt eine Befestigungsvorrichtung 1 mit einem Träger 2, der im Ausführungsbeispiel an einer Stromschiene 3 befestigt ist. Neben dem Verbindungsbereich zur Befestigung an einer Stromschiene 3 weist der Träger 2 zwei Klammern 4, 5 auf, die in Längsrichtung des Trägers 2 gesehen hintereinander angeordnet sind und in Querrichtung gesehen versetzt zueinander angeordnet sind. Eine tailliert ausgebildete Zugentlastungsaufnahme 6 ist ebenfalls an dem Träger 2 vorgesehen. Die Zugentlastungsaufnahme 6 ist gegenüber dem Montageabschnitt 7 für die Klammern 4, 5 erhöht angeordnet. Die Zugentlastungsaufnahme 6 weist weiterhin eine Öffnung 8 auf, durch die beispielsweise ein Kabelbinder als Zugentlastung hindurch geschoben und daran befestigt werden kann.

Die Klammern 4, 5 weisen jeweils einen Fußteil 4.1, 5.1 und sich davon nach oben erstreckende Schenkel 4.2, 4.3 und 5.2, 5.3 auf. Die Schenkel 4.2, 4.3, 5.2, 5.3 weisen jeweils Auswölbungen auf, die eine Befestigungsöffnung zur klemmenden Aufnahme eines zu befestigenden Gegenstands, wie beispielsweise eine elektrische Leitung, definieren. Die Öffnungen sind mit den Bezugsziffern 4.4 bzw. 5.4 markiert.

Der Fig. 1 kann man weiterhin entnehmen, dass die Klammern 4, 5 seitlich über den Träger 2 überstehen. Andererseits ist beispielsweise neben dem Schenkel 4.3 ein Freiraum, in den eine Klammer eines hier nicht dargestellten benachbarten Trägers 2 angeordnet werden kann. Dadurch, dass die Klammern 4, 5 versetzt angeordnet sind, können mehrere Träger mit entsprechenden Klammern 4, 5 nebeneinander an der Stromschiene 3 angeordnet werden und ineinandergreifen. Dadurch können zu befestigende Gegenstände, beispielsweise Kabel, näher beieinander angeordnet werden.

Die Fig. 2 zeigt eine Seitenansicht der Befestigungsanordnung 1 der Fig. 1. Hier ist zu erkennen, dass die Fußteile 4.1, 5.1 der Klammern 4, 5 jeweils durch einen Niet 9, 10 an dem Montageabschnitt 7 und damit am Träger 2 befestigt sind. Weiter ist zu erkennen, dass der Träger 2 in einem Verbindungsbereich einen U-förmigen Befestigungsabschnitt 11 aufweist, durch den eine im Querschnitt rechteckige Stromschiene 3 zumindest teilweise umfasst werden kann. Der Träger 2 kann hierzu einfach auf eine solche Stromschiene 3 aufgeschoben werden. Ein Falz 12 ist dabei in der Lage, die Stromschiene 3 zu hintergreifen und den Träger 2 auf diese Art und Weise sicher an der Stromschiene 3 zu halten.

Die Fig. 3 zeigt eine Frontansicht der Befestigungsanordnung 1. Hier ist deutlich zu erkennen, dass die Fußteile 4.1, 5.1 der Klammern 4, 5 seitlich über den Träger 2 hervorstehen. Außerdem ist zu erkennen, dass die Öffnungen 4.4, 5.4 nahe beieinander angeordnet sind, sodass beispielsweise elektrische Leitungen mit geringem Abstand zueinander fixiert werden können.

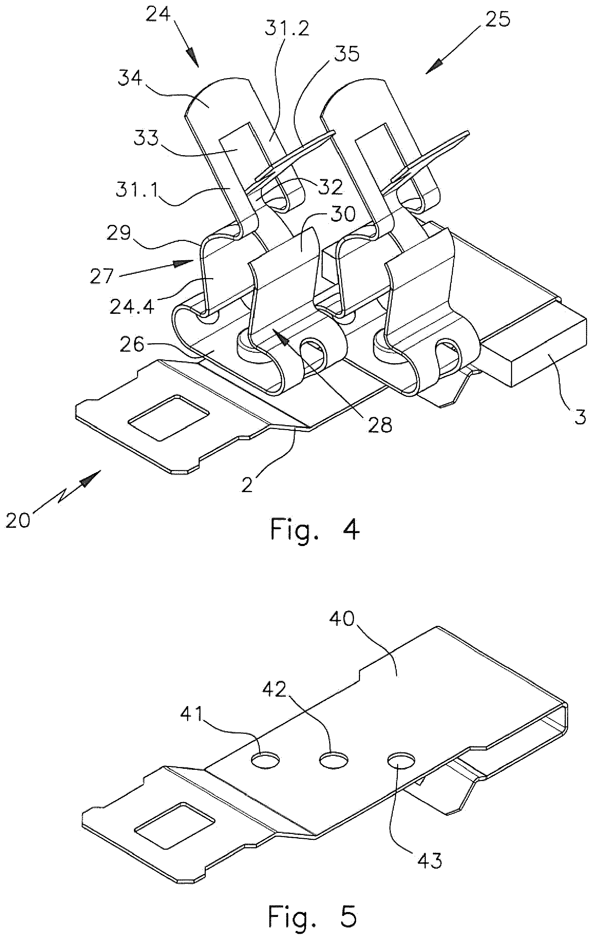

Die Fig. 4 zeigt eine alternative Ausführungsform einer Befestigungsvorrichtung 20. Der Träger 2 ist identisch ausgestaltet wie der des Ausführungsbeispiels der Fig. 1 und daher nicht näher beschrieben. Der Unterschied der Befestigungsvorrichtung 20 zur Befestigungsvorrichtung 1 liegt in der Ausgestaltung der Klammern 24, 25. Dies sei anhand der Klammer 24 näher erläutert.

Die Klammer 24 weist einen Fußteil 26 sowie an einer Seite des Fußteils 26 einen Schenkel 27 und einen gegenüberliegend an der anderen Seite des Fußteils 26 angeordneten Schenkel 28 auf. Die Schenkel 27, 28 erstrecken sich von dem Fußteil 26 nach oben. Die Schenkel 27, 28 weisen in einem Klemmbereich jeweils eine Auswölbung 29, 30 auf, wobei durch die Auswölbungen 29, 30 eine Öffnung 24.4 ausgebildet wird, die zur Aufnahme eines Gegenstands, beispielsweise einer elektrischen Leitung oder eines Rohrs, dient. Über den Auswölbungen 29, 30 weisen die Schenkel 27, 28 abgewinkelte Abschnitte 31.1, 31.2 und 32 auf. Dabei ragt der Abschnitt 32 in eine schlitzartige Ausnehmung 33 des Schenkels 27. Die schlitzförmige Ausnehmung 33 wird durch die Abschnitte 31.1, 31.2 begrenzt. Die Breite des Abschnitts 32 ist gegenüber der Breite des Fußteils 26 reduziert.

Die Schenkel 27, 28 können aufgeweitet werden. Dies bedeutet, dass die Abschnitte 31.1, 31.2 und 32 aneinander vorbeibewegt werden können und zwar soweit, dass von oben ein Gegenstand bis zu den Auswölbungen 29, 30 eingedrückt werden kann.

Die freien Enden 34, 35 der Schenkel 27, 28 sind als Einführhilfen ausgebildet und erleichtern das Einführen eines Gegenstands in die durch die Auswölbungen 29, 30 gebildete Öffnung 24.4. Dadurch, dass der Abschnitt 32 in die schlitzförmige Ausnehmung 33 eintauchen kann, können die Auswölbungen 29, 30 weiter aufeinander zubewegt werden als dies der Fall wäre, wenn die schlitzförmige Öffnung 33 nicht vorhanden wäre. Somit kann durch die Auswölbungen 29, 30 eine kleinere Öffnung definiert werden.

Im Bereich der freien Enden bzw. im Bereich der Einführhilfen können Sollbruchstellen vorgesehen sein. So können freie Enden, die bei der Halterung von Gegenständen mit großem Durchmesser seitlich abstehen und mit benachbarten Gegenständen oder Klammern kollidieren können, einfach abgetrennt werden. Alternativ oder zusätzlich können die freien Enden umgebogen sein, damit sie einfacher gegriffen werden können, sodass die Halterklammer, insbesondere zum Einbringen eines Gegenstands mit großem Durchmesser, manuell aufgeweitet werden kann. Auch andere Ausgestaltungen der freien Enden als Greifabschnitte sind denkbar.

Die Fig. 5 zeigt eine alternative Ausführungsform eines Trägers 40. Der Träger weist drei versetzt zueinander angeordnete Befestigungsöffnungen 41, 42, 43 auf. An jeder der Befestigungsöffnungen 41, 42, 43 kann eine Klammer 4, 5 bzw. 24, 25 befestigt werden. Der Träger 40 ist daher dazu ausgebildet, drei versetzt zueinander angeordnete Klammern aufzunehmen.

Befestigungsöffnung 41, 42, 43 des Trägers 40 und/oder entsprechende Öffnungen im Fußteil der Klammern können als Verdrehschutz ausgebildet sein, also insbesondere nicht kreisrund ausgebildet sein, sodass die Halteklammer durch einen Niet drehfest z. B. an einem Träger befestigt werden kann. Die Öffnung kann z. B. einen oder mehrere Vorsprünge aufweisen, unrund oder unsymmetrisch ausgebildet sein.

## Patentansprüche

1. Befestigungsvorrichtung (1, 20) zur Ausbildung einer elektrischen und mechanischen Verbindung zwischen einer Stromschiene (3), Montageplatte oder leitenden Montagefläche und einem oder mehreren länglichen Gegenständen, mit mindestens einer Klammer (4, 5, 24, 25) die einen Fußteil (4.1, 5.1, 26)und zwei Schenkel (4.2, 4.3, 5.2, 5.3, 27, 28) zur klemmenden Halterung des Gegenstands umfasst, wobei die Befestigungsvorrichtung (1, 20) einen Träger (2) umfasst, an dem die mindestens eine Klammer (4, 5, 24, 25) fixiert ist, der an der Stromschiene (3), Montageplatte oder leitenden Montagefläche anordenbar ist, **dadurch gekennzeichnet, dass** zumindest zwei Klammern (4, 5, 24, 25) an dem Träger (2) in Längsrichtung des Trägers hintereinander vorgesehen sind, die quer zur Längsrichtung des Trägers (2) versetzt zueinander angeordnet sind, wobei zumindest eine Klammer (4, 5, 24, 25) seitlich über den Träger (2) übersteht, sodass sie in einen Freiraum eines benachbarten Trägers (2) ragen kann.

2. Befestigungsvorrichtung nach Anspruch 1, **dadurch gekennzeichnet, dass** die Klammern (4, 5, 24, 25) mit dem Träger (2) vernietet sind.

3. Befestigungsvorrichtung nach Anspruch 1, **dadurch gekennzeichnet, dass** die Klammern (4, 5, 24, 25) an dem Träger (2) lösbar befestigbar sind.

4. Befestigungsvorrichtung nach einem der vorhergehenden Ansprüche, **dadurch gekennzeichnet, dass** der Träger (2) eine insbesondere taillierte Zugentlastungsaufnahme (6) aufweist.

5. Befestigungsvorrichtung nach einem der vorhergehenden Ansprüche, **dadurch gekennzeichnet, dass** der Träger (2) zumindest in einem Verbindungsbereich U-förmig ausgebildet ist.

6. Befestigungsvorrichtung nach einem der vorhergehenden Ansprüche, **dadurch gekennzeichnet, dass** die Klammern (4, 5, 24, 25) in Längsrichtung des Trägers (2) gesehen hinter dem Verbindungsbereich angeordnet sind.

7. Befestigungsvorrichtung nach einem der vorhergehenden Ansprüche, **dadurch gekennzeichnet, dass** bei zumindest einer Klammer (24, 25) Abschnitte (31.1, 31.2, 32) der Schenkel (27, 28) aneinander vorbeibewegbar sind.

8. Befestigungsvorrichtung nach einem der vorhergehenden Ansprüche, **dadurch gekennzeichnet, dass** zumindest einer der Schenkel (28) in einem Bereich schmaler ist als der Fußteil (26).

9. Befestigungsvorrichtung nach einem der vorhergehenden Ansprüche, **dadurch gekennzeichnet, dass** einer der Schenkel (27) eine Öffnung (33) aufweist und der andere Schenkel (28) diese Öffnung (33) mit einem Abschnitt (32) durchgreift.

10. Befestigungsvorrichtung nach einem der vorhergehenden Ansprüche, **dadurch gekennzeichnet, dass** die Schenkel jeweils in einem Abschnitt mit einer geringeren Breite als der Fußteil (26) ausgebildet sind und die Abschnitte sich überlappen.

11. Befestigungsvorrichtung nach einem der vorhergehenden Ansprüche, **dadurch gekennzeichnet, dass** die Klammer (4, 5, 24, 25) mit einem elektrisch leitfähigen Material beschichtet ist.

## Claims

1. Fastening device (1, 20) for forming an electrical and mechanical connection between a busbar (3), mounting plate or conductive mounting surface and one or several oblong objects, with at least one clip (4, 5, 24, 25) which comprises a foot part (4.1, 5.1, 26) and two legs (4.2, 4.3, 5.2, 5.3, 27, 28) for clamping the object, in which the fastening device (1, 20) comprises a carrier (2), to which the at least one clip (4, 5, 24, 25) is fixed, which may be arranged on the busbar (3), mounting plate or conductive mounting surface, **characterised in that** at least two clips (4, 5, 24, 25) are provided on the carrier (2) one behind the other in the longitudinal direction of the carrier, which are arranged offset to each other crosswise to the longitudinal direction of the carrier (2), in which at least one clip (4, 5, 24, 25) protrudes sideways over the carrier (2), so that it may project into an open space of an adjacent carrier (2).

2. Fastening device according to claim 1, **characterised in that** the clips (4, 5, 24, 25) are riveted to the carrier (2).

3. Fastening device according to claim 1, **characterised in that** the clips (4,5, 24, 25) may be fastened to the carrier (2) so that they may be detached.

4. Fastening device according to one of the previous claims, **characterised in that** the carrier (2) has a particularly waisted strain relief fixture (6).

5. Fastening device according to one of the previous claims, **characterised in that** the carrier (2) is made U-shaped at least in a connecting area.

6. Fastening device according to one of the previous claims, **characterised in that** the clips (4, 5, 24, 25) are arranged behind the connecting area seen in the longitudinal direction of the carrier (2).

7. Fastening device according to one of the previous claims, **characterised in that** in the case of at least one clip (24, 25) sections (31.1, 31.2, 32) of the legs (27, 28) may move past each other.

8. Fastening device according to one of the previous claims, **characterised in that** at least one of the legs (28) is narrower in an area than the foot part (26).

9. Fastening device according to one of the previous claims, **characterised in that** one of the legs (27) has an opening (33) and the other leg (28) reaches through this opening (33) with a section (32).

10. Fastening device according to one of the previous claims, **characterised in that** the legs are made in a section with a smaller width than the foot part (26) and the sections overlap each other.

11. Fastening device according to one of the previous claims, **characterised in that** the clip (4, 5, 24, 25) is coated with an electrically conductive material.

## Revendications

1. Dispositif de fixation (1, 20) pour réaliser une liaison électrique et mécanique entre un rail électrique (3), une plaque de montage ou une surface de montage conductrice et un ou plusieurs objets oblongs, comportant au moins une attache (4, 5, 24, 25) qui comprend une partie de pied (4.1, 5.1, 26) et deux branches (4.2, 4.3, 5.2, 5.3, 27, 28) pour la retenue par coincement de l'objet, le dispositif de fixation (1, 20) comprenant un support (2) sur lequel ladite au moins une attache (4, 5, 24, 25) peut être fixée et qui peut être agencé sur le rail électrique (3), sur la plaque de montage ou sur la surface de montage conductrice, **caractérisé en ce qu'**au moins deux attaches (4, 5, 24, 25) sont prévues sur le support (2) l'une derrière l'autre en direction longitudinal du support, qui sont agencées en décalage transversalement à la direction longitudinale du support (2), au moins une attache (4, 5, 24, 25) dépassant latéralement au-delà du support (2), de sorte qu'elle peut dépasser dans un espace libre d'un support voisin (2).

2. Dispositif de fixation selon la revendication 1, **caractérisé en ce que** les attaches (4, 5, 24, 25) sont reliées par rivetage au support (2).

3. Dispositif de fixation selon la revendication 1, **caractérisé en ce que** les attaches (4, 5, 24, 25) sont susceptibles d'être fixées de façon détachable sur le support (2).

4. Dispositif de fixation selon l'une des revendications précédentes, **caractérisé en ce que** le support (2) présente un organe d'encaissement de charge de traction (6) en particulier aminci.

5. Dispositif de fixation selon l'une des revendications précédentes, **caractérisé en ce que** le support (2) est réalisé en forme de U au moins dans une zone de liaison.

6. Dispositif de fixation selon l'une des revendications précédentes, **caractérisé en ce que** les attaches (4, 5, 24, 25) sont agencées derrière la zone de liaison, vue en direction longitudinale du support (2).

7. Dispositif de fixation selon l'une des revendications précédentes, **caractérisé en ce que** pour au moins une attache (24, 25), des portions (31.1, 31.2, 32) des branches (27, 28) sont susceptibles de se déplacer les unes le long des autres.

8. Dispositif de fixation selon l'une des revendications précédentes, **caractérisé en ce que** l'une au moins des branches (28) est plus étroite dans une zone que la partie de pied (26).

9. Dispositif de fixation selon l'une des revendications précédentes, **caractérisé en ce que** l'une des branches (27) présente une ouverture (33) et l'autre branche (28) traverse cette ouverture (33) par une portion (32).

10. Dispositif de fixation selon l'une des revendications précédentes, **caractérisé en ce que** les branches sont réalisées chacune dans une portion d'une largeur inférieure à celle de la partie de pied (26) et **en ce que** les portions se chevauchent.

11. Dispositif de fixation selon l'une des revendications précédentes, **caractérisé en ce que** l'attache (4, 5, 24, 25) est revêtue d'un matériau électriquement conducteur.
